# EUROPEAN PATENT APPLICATION

(11) **EP 4 606 639 A1**
(43) Date of publication of application: **27.08.2025**
(21) Application number: 25153569.6
(22) Date of filing: 23.01.2025
(51) Int. Cl.: B60L 58/24, B60L 58/26, B60L 58/27, H01M 10/61, H01M 10/613, H01M 10/615

(54) **BATTERY TEMPERATURE ADJUSTMENT SYSTEM AND BATTERY TEMPERATURE ADJUSTMENT METHOD**

(30) Priority: 31.01.2024 JP 2024012845
(71) Applicant: TOYOTA JIDOSHA KABUSHIKI KAISHA, Aichi-ken, 471-8571 (JP)
(72) Inventor: SASAKI, Hirotaka, Toyota-shi, 471-8571 (JP)
(74) Representative: J A Kemp LLP

(57) **Abstract**

A battery temperature adjustment system configured to adjust a temperature of a power storage device (100) mounted on a vehicle (1) includes a temperature adjustment device (800), a processor (301), and a display device (704). A setting mode of the temperature adjustment device (800) includes a first mode and a second mode. The display device (704) is configured to include a common element in an indication of each of the first mode and the second mode, and to add a specific element to the common element in either the first mode or the second mode. The processor (301) is configured to control the display device (704) to display the common element when the setting mode is each of the first mode and the second mode and to display the specific element when the setting mode is either the first mode or the second mode.

## Description

### BACKGROUND OF THE INVENTION

### 1. Field of the Invention

The present disclosure relates to a battery temperature adjustment system and a battery temperature adjustment method, and more particularly, to a battery temperature adjustment system that adjusts a temperature of a power storage device mounted on a vehicle, and a battery temperature adjustment method in the battery temperature adjustment system.

### 2. Description of Related Art

Hitherto, there has been a technology in which, when a charging facility is set as a destination of a vehicle, the temperature of an in-vehicle battery is preadjusted (hereinafter referred to as "temperature adjustment") to reach a temperature suitable for charging before the vehicle arrives at the destination (see, for example, Japanese Unexamined Patent Application Publication No. 2009-044887 (JP 2009-044887 A)).

### SUMMARY OF THE INVENTION

In the technology of JP 2009-044887 A, temperature adjustment control is executed on the in-vehicle battery in accordance with a destination set by operating a car navigation system. The temperature adjustment for the in-vehicle battery may be executed in response to a user operation on an in-vehicle switch etc. when desired by the user. In this way, the two types of temperature adjustment control are control on the temperature adjustment for the in-vehicle battery. There is room for improvement in how the two types of control are used appropriately.

The present disclosure provides a battery temperature adjustment system and a battery temperature adjustment method that are capable of suppressing a decrease in usability by informing a user of a plurality of settings for adjusting a temperature of a power storage device in an easy-to-understand way.

A first aspect of the present disclosure is a battery temperature adjustment system configured to adjust a temperature of a power storage device mounted on a vehicle. The battery temperature adjustment system includes: a temperature adjustment device configured to adjust the temperature of the power storage device; a processor configured to control the temperature adjustment device; and a display device configured to display a setting mode of the temperature adjustment device. The setting mode of the temperature adjustment device includes a first mode and a second mode. The first mode is a mode that is a setting in which, when a travel route of the vehicle includes a facility where the power storage device is chargeable, the temperature of the power storage device is adjusted within a first temperature range suitable for charging at a time of arrival at the facility. The second mode is a mode that is a setting in which the temperature of the power storage device is adjusted within a second temperature range suitable for charging or traveling in response to reception of a predetermined operation, for adjusting the temperature of the power storage device within the second temperature range, by a user of the vehicle. The display device is configured to include a common element in an indication of each of the first mode and the second mode, and to add a specific element to the common element in either the first mode or the second mode. The processor is configured to control the display device to display the common element when the setting mode is each of the first mode and the second mode. The processor is configured to control the display device to display the specific element when the setting mode is either the first mode or the second mode.

In this configuration, the display device displays the common element in each of the first mode in which the temperature of the power storage device is adjusted when the travel route includes a facility where the power storage device is chargeable and the second mode in which the temperature of the power storage device is adjusted in response to the predetermined user operation, and displays the specific element in either one of the two modes. As a result, it is possible to provide the battery temperature adjustment system capable of suppressing a decrease in usability by informing the user of a plurality of settings for adjusting the temperature of the power storage device in an easy-to-understand way.

In the battery temperature adjustment system according to the first aspect of the present disclosure, the processor may be configured to control the temperature adjustment device to adjust the temperature of the power storage device according to the setting mode. The processor may be configured to give priority to the second mode when the predetermined operation is received while the setting mode is the first mode.

In this configuration, when the predetermined user operation for adjusting the temperature of the power storage device is received in the first mode in which the temperature of the power storage device is adjusted when the travel route includes a facility where the power storage device is chargeable, priority is given to the second mode in which the temperature of the power storage device is adjusted in response to the predetermined user operation. As a result, the temperature of the power storage device can be quickly adjusted in response to the user operation for adjusting the temperature of the power storage device.

In the battery temperature adjustment system according to the first aspect of the present disclosure, the processor may be configured to control the temperature adjustment device to adjust the temperature of the power storage device according to the setting mode. The processor may be configured to, when the predetermined operation is received while the setting mode is the first mode, reject the predetermined operation and maintain the first mode.

In this configuration, when the predetermined user operation for adjusting the temperature of the power storage device is received in the first mode in which the temperature of the power storage device is adjusted when the travel route includes a facility where the power storage device is chargeable, the predetermined operation is rejected and the first mode is maintained without being switched to the second mode in which the temperature of the power storage device is adjusted in response to the predetermined user operation. As a result, the temperature of the power storage device can be brought into the temperature range suitable for charging at the time of arrival at a facility where the power storage device is chargeable, and additional power consumption due to adjustment of the temperature of the power storage device in response to the user operation for adjusting the temperature of the power storage device can be suppressed.

In the battery temperature adjustment system according to the first aspect of the present disclosure, the processor may be configured to control the temperature adjustment device to adjust the temperature of the power storage device according to the setting mode. The processor may be configured to maintain the second mode when the setting mode is the second mode and the travel route includes the facility.

In this configuration, when the setting mode is the second mode in which the temperature of the power storage device is adjusted in response to the predetermined user operation and the travel route includes a facility where the power storage device is chargeable, the second mode is maintained without being switched to the first mode in which the temperature of the power storage device is adjusted when the travel route includes a facility where the power storage device is chargeable. As a result, the temperature of the power storage device can be quickly adjusted in response to the user operation for adjusting the temperature of the power storage device.

In the battery temperature adjustment system according to the first aspect of the present disclosure, the processor may be configured to control the temperature adjustment device to adjust the temperature of the power storage device according to the setting mode. The processor may be configured to give priority to the first mode when the setting mode is the second mode and the travel route includes the facility.

In this configuration, when the setting mode is the second mode in which the temperature of the power storage device is adjusted in response to the predetermined user operation and the travel route includes a facility where the power storage device is chargeable, the first mode in which the temperature of the power storage device is adjusted when the travel route includes a facility where the power storage device is chargeable is given priority over the second mode. As a result, the temperature of the power storage device can be brought into the temperature range suitable for charging at the time of arrival at a facility where the power storage device is chargeable, and additional power consumption due to adjustment of the temperature of the power storage device in response to the user operation for adjusting the temperature of the power storage device can be suppressed.

A second aspect of the present disclosure is a battery temperature adjustment method in a battery temperature adjustment system configured to adjust a temperature of a power storage device mounted on a vehicle. The battery temperature adjustment method includes: controlling, by a processor, a display device to display a common element when a setting mode is each of a first mode and a second mode; and controlling, by the processor, the display device to display a specific element when the setting mode is either the first mode or the second mode. The battery temperature adjustment system includes a temperature adjustment device configured to adjust the temperature of the power storage device, the processor configured to control the temperature adjustment device, and the display device configured to display the setting mode of the temperature adjustment device. The setting modes of the temperature adjustment device include the first mode and the second mode. The first mode is a mode that is a setting in which, when a travel route of the vehicle includes a facility where the power storage device is chargeable, the temperature of the power storage device is adjusted within a first temperature range suitable for charging at a time of arrival at the facility. The second mode is a mode that is a setting in which the temperature of the power storage device is adjusted within a second temperature range suitable for charging or traveling in response to reception of a predetermined operation, for adjusting the temperature of the power storage device within the second temperature range, by a user of the vehicle. The display device is configured to include the common element in an indication of each of the first mode and the second mode, and to add the specific element to the common element in either the first mode or the second mode.

With this configuration, it is possible to provide the battery temperature adjustment method capable of suppressing a decrease in usability by informing the user of a plurality of settings for adjusting the temperature of the power storage device in an easy-to-understand way.

According to the present disclosure, it is possible to provide the battery temperature adjustment system and the battery temperature adjustment method that are capable of suppressing the decrease in usability by informing the user of a plurality of settings for adjusting the temperature of the power storage device in an easy-to-understand way.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an overall configuration diagram of an electrified vehicle according to embodiments;
FIG. 2 is a flowchart showing a flow of a battery temperature adjustment setting process in a first embodiment;
FIG. 3A shows an indicator of a preconditioning switch in the embodiment;
FIG. 3B shows the indicator of the preconditioning switch in the embodiment;
FIG. 3C shows the indicator of the preconditioning switch in the embodiment;
FIG. 4 is a flowchart showing a flow of a battery temperature adjustment execution process in the embodiment;
FIG. 5 is a flowchart showing a flow of a battery temperature adjustment setting process in a second embodiment;
FIG. 6 is a flowchart showing a flow of a battery temperature adjustment setting process in a third embodiment;
FIG. 7 is a flowchart showing a flow of a battery temperature adjustment setting process in a fourth embodiment; and
FIG. 8 is a flowchart showing a flow of a battery temperature adjustment setting process in a fifth embodiment.

### DETAILED DESCRIPTION OF EMBODIMENTS

Embodiments of the present disclosure will be described in detail below with reference to the drawings. The same or corresponding parts are denoted by the same signs throughout the drawings, and description thereof will not be repeated.

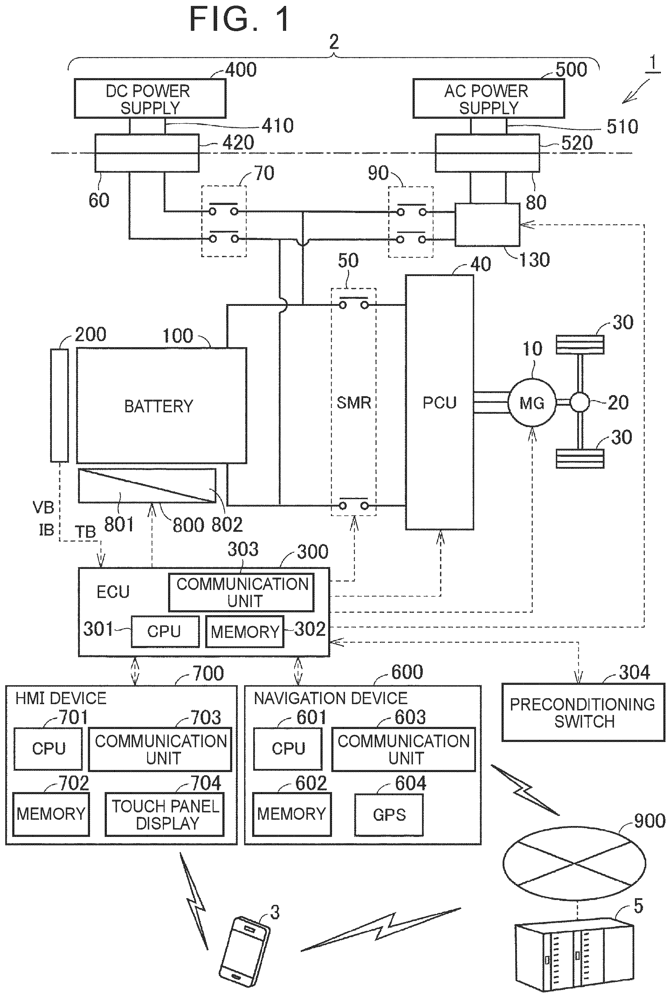

FIG. 1 is an overall configuration diagram of an electrified vehicle 1 according to the embodiments. In the embodiments, the electrified vehicle 1 is, for example, a battery electric vehicle (BEV). The electrified vehicle 1 includes a motor generator (MG) 10 that is a rotary electric machine, a power transmission gear 20, drive wheels 30, a power control unit (PCU) 40, a system main relay (SMR) 50, a battery 100, a monitoring unit 200, and an electronic control unit (ECU) 300.

The MG 10 is, for example, an interior permanent magnet synchronous motor (IPM motor), and has a function as an electric motor and a function as a generator. The output torque of the MG 10 is transmitted to the drive wheels 30 via the power transmission gear 20 that includes a reduction gear, a differential gear, etc.

During braking of the electrified vehicle 1, the MG 10 is driven by the drive wheels 30, and the MG 10 operates as a generator. The MG 10 thus also functions as a braking device that performs regenerative braking by converting kinetic energy of the electrified vehicle 1 to electric power. Regenerative power generated by the regenerative braking force of the MG 10 is stored in the battery 100.

The PCU 40 is a power conversion device that bidirectionally converts electric power between the MG 10 and the battery 100. The PCU 40 includes, for example, an inverter and a converter that operate based on control signals from the ECU 300. The converter may be omitted from the PCU 40.

The SMR 50 is electrically connected to power lines connecting the battery 100 and the PCU 40. When the SMR 50 is closed (ON) (conductive) according to a control signal from the ECU 300, electric power can be transferred between the battery 100 and the PCU 40. When the SMR 50 is open (OFF) (disconnected) according to a control signal from the ECU 300, the battery 100 and the PCU 40 are electrically disconnected from each other.

The battery 100 stores electric power for driving the MG 10. The battery 100 is a rechargeable direct current power supply (secondary battery), and is composed of a stack of a plurality of single cells (battery cells) that is, for example, electrically connected in series. The battery 100 is a storage battery. Each single cell is, for example, a lithium-ion battery. Each single cell may be either a nickel metal hydride battery or an all-solid-state battery.

The monitoring unit 200 includes a voltage detection unit, a current sensor, and a temperature detection unit. The voltage detection unit detects a voltage VB of the battery. The current sensor detects a current IB that is input to and output from the battery 100. The temperature detection unit detects a temperature TB of the battery 100. Each detection unit outputs its detection result to the ECU 300.

The electrified vehicle 1 includes a direct current (DC) inlet 60 and an alternating current (AC) inlet 80, and the battery 100 is chargeable (externally chargeable) with electric vehicle supply equipment (EVSE: charging equipment) 2 including an external DC power supply 400 or an external AC power supply 500. The DC inlet 60 is configured to be connected to a connector 420 mounted at a distal end of a charging cable 410 of the external DC power supply (EVSE) 400. A charging relay 70 is electrically connected to power lines connecting the DC inlet 60 and the battery 100. The charging relay 70 switches between allowing and not allowing supply of electric power between the DC inlet 60 and the battery 100 according to a control signal from the ECU 300. External charging (fast charging) of the battery 100 is performed by closing the charging relay 70.

The AC inlet 80 is configured to be connected to a connector 520 mounted at a distal end of a charging cable 510 of the external AC power supply (EVSE) 500. An in-vehicle charger 130 is provided on power lines between the AC inlet 80 and the battery 100. The in-vehicle charger 130 converts AC power supplied from the external AC power supply 500 to DC power and converts the DC power to a voltage that can charge the battery 100. A charging relay 90 is electrically connected to power lines connecting the in-vehicle charger 130 and the battery 100. The charging relay 90 switches between allowing and not allowing supply of electric power between the in-vehicle charger 130 and the battery 100 according to a control signal from the ECU 300. External charging (normal charging) of the battery 100 is performed by closing the charging relay 90. When charging the electrified vehicle 1 (battery 100), external charging is performed using either the external DC power supply 400 or the external AC power supply 500.

The ECU 300 includes a central processing unit (CPU) 301, a memory (including, for example, a read only memory (ROM) and a random access memory (RAM)) 302, and a communication unit 303. The ECU 300 controls each device to bring the electrified vehicle 1 to a desired state, based on signals received from the monitoring unit 200, signals from various sensors (not shown) (e.g., an accelerator operation amount signal and a vehicle speed signal), and information from maps, programs, etc. stored in the memory 302. The communication unit 303 includes a communication interface (I/F) for the communication unit 303 to wirelessly communicate with a network 900 and user equipment 3. The communication unit 303 may include a telematics control unit (TCU) and/or a data communication module (DCM) that perform wireless communication. The ECU 300 also controls a cooling and heating device 800 that will be described later.

A navigation device 600 calculates the current location (vehicle location) based on map data including information such as the location and output of the EVSE (e.g., the DC power supply 400 or the AC power supply 500) and Global Positioning System (GPS) information. The navigation device 600 includes a CPU 601, a memory 602, and a communication unit 603 similar to those of the ECU 300, and a GPS receiver 604 etc., and is implemented by executing programs stored in the memory. The navigation device 600 provides route guidance to the destination set by a user. It is also possible to add a waypoint(s) to the route to the destination. The map data may be acquired by communication via an external server 5 and the network 900.

A human-machine interface (HMI) device 700 includes an input device and a display device. The HMI device 700 includes a CPU 701, a memory 702, and a communication unit 703 similar to those of the ECU 300, and a touch panel display 704 that functions as an input device and a display device. The touch panel display 704 is also used as an input device and a display device for the navigation device 600.

The user equipment 3 is portable by the user. The user equipment 3 is mobile equipment that is carried and operated by the user (vehicle manager) of the electrified vehicle 1. In the embodiments, the user equipment 3 is a smartphone with a touch panel display. The user equipment 3 may be any equipment that can be carried by the user of the electrified vehicle 1. For example, the user equipment 3 may be a laptop, a tablet, a handheld game console, or a wearable device (smartwatch, smart glasses, smart gloves, etc.). For example, the user equipment 3 can communicate with the communication unit 303 by short-range wireless communication, and can also communicate with the external server 5 via the network 900.

The electrified vehicle 1 includes the cooling and heating device 800. The cooling and heating device 800 adjusts the temperature of the battery 100. The cooling and heating device 800 is composed of a battery cooling unit (battery cooling system) 801 and a battery heating unit (battery heating system) 802. The cooling and heating device 800 is configured to cool or heat the battery 100. The cooling and heating device 800 may be an air cooling device (heat exchange using gas as a medium) or a liquid cooling device (heat exchange using liquid as a medium). The cooling and heating device 800 may utilize exhaust heat from the MG 10 or the PCU 40 or may use heat generated by charging and discharging of the battery 100.

The battery 100 has appropriate charging power (charging current) according to the temperature TB of the battery 100. Charging with a current higher than the appropriate charging power may accelerate degradation of the battery 100. Charging with a current higher than the acceptable power (allowable power) of the battery 100 reduces the charging efficiency and increases power consumption during charging. One possible way to reduce degradation of the battery 100 etc. is to limit the charging power (charging current) when the temperature TB is high or low. However, this may increase the charging period depending on the temperature TB. It is therefore preferable to adjust the temperature of the battery 100 within an appropriate temperature range before the start of charging when external charging of the battery 100 is expected.

There has been a technology in which, when a charging facility including charging equipment such as the EVSE 2 is set as a destination of the electrified vehicle 1, the temperature of the battery 100 is preadjusted within a temperature range suitable for charging before the electrified vehicle 1 arrives at the destination. In such a technology, temperature adjustment control is executed on the battery 100 in accordance with a destination set by operating the navigation device 600. The temperature adjustment for the battery 100 may be executed in response to a user operation on an in-vehicle switch etc. when desired by the user. In this way, the two types of temperature adjustment control are control on the temperature adjustment for the battery 100. There is room for improvement in how the two types of control are used appropriately.

### First Embodiment

A setting mode of the cooling and heating device 800 includes a navigation-triggered temperature adjustment mode that is a setting in which, when the travel route of the electrified vehicle 1 includes a facility where the battery 100 is chargeable, the temperature of the battery 100 is adjusted within a first temperature range suitable for charging at the time of arrival at the facility, and an operation-triggered temperature adjustment mode that is a setting in which the temperature of the battery 100 is adjusted within a second temperature range suitable for charging or traveling in response to reception of a predetermined operation by the user of the electrified vehicle 1 for adjusting the temperature of the battery 100 within the second temperature range. The CPU 301 of the ECU 300 controls the cooling and heating device 800 to adjust the temperature of the battery 100 according to the setting mode, and gives priority to the operation-triggered temperature adjustment mode when the predetermined operation is received while the setting mode is the navigation-triggered temperature adjustment mode.

Therefore, when the predetermined user operation for adjusting the temperature of the battery 100 is received in the navigation-triggered temperature adjustment mode in which the temperature of the battery 100 is adjusted when the travel route includes a facility where the battery 100 is chargeable, priority is given to the operation-triggered temperature adjustment mode in which the temperature of the battery 100 is adjusted in response to the predetermined user operation. As a result, the temperature of the battery 100 can be quickly adjusted in response to the user operation for adjusting the temperature of the battery 100.

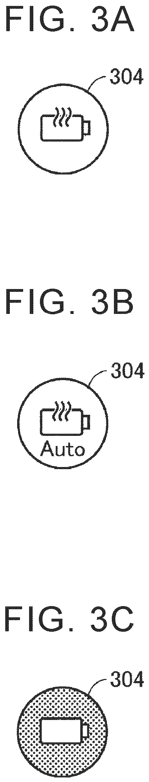

As shown in FIG. 1, the electrified vehicle 1 further includes a preconditioning switch 304 that indicates the setting mode of the cooling and heating device 800. The preconditioning switch 304 is, for example, a push button switch including an indicator on its operation surface. As shown in FIGS. 3A to 3C described later, the preconditioning switch 304 includes a common element in the indication of each of the navigation-triggered temperature adjustment mode and the operation-triggered temperature adjustment mode, and adds a specific element to the common element in either the navigation-triggered temperature adjustment mode or the operation-triggered temperature adjustment mode. The CPU 301 of the ECU 300 controls the preconditioning switch 304 to display the common element when the setting mode is each of the navigation-triggered temperature adjustment mode and the operation-triggered temperature adjustment mode, and to display the specific element when the setting mode is either one of them.

Therefore, the preconditioning switch 304 displays the common element in each of the navigation-triggered temperature adjustment mode in which the temperature of the battery 100 is adjusted when the travel route includes a facility where the battery 100 is chargeable and the operation-triggered temperature adjustment mode in which the temperature of the battery 100 is adjusted in response to the predetermined user operation, and displays the specific element in either one of the two modes. As a result, the user can be informed of a plurality of settings for adjusting the temperature of the battery 100 in an easy-to-understand way, thereby suppressing a decrease in usability.

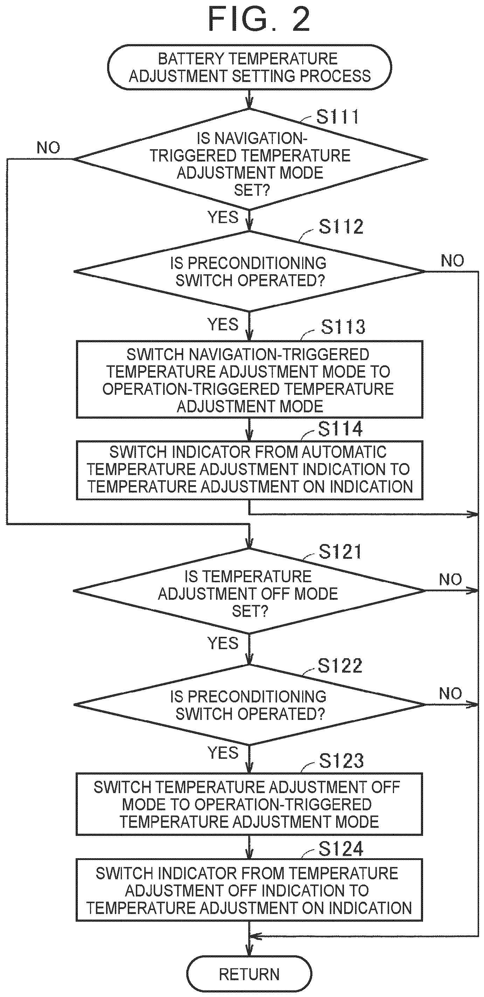

FIG. 2 is a flowchart showing a flow of a battery temperature adjustment setting process in the first embodiment. Referring to FIG. 2, the battery temperature adjustment setting process is executed by being called from a higher-level process by the CPU 301 of the ECU 300 at predetermined cycles.

First, the CPU 301 of the ECU 300 determines whether the setting mode of the cooling and heating device 800 is set to the navigation-triggered temperature adjustment mode (step S111). When determination is made that the navigation-triggered temperature adjustment mode is set (YES in step S111), the CPU 301 determines whether the preconditioning switch 304 is turned ON (step S112).

When determination is made that the preconditioning switch 304 is turned ON (YES in step S112), the CPU 301 switches the setting mode of the cooling and heating device 800 from the navigation-triggered temperature adjustment mode to the operation-triggered temperature adjustment mode (step S113), and controls the preconditioning switch 304 to switch the indicator of the preconditioning switch 304 from an automatic temperature adjustment indication to a temperature adjustment ON indication (step S114).

FIGS. 3A to 3C show the indicator of the preconditioning switch 304 in the present embodiment. Referring to FIGS. 3A to 3C, FIG. 3A shows the temperature adjustment ON indication. The temperature adjustment ON indication indicates that the setting mode of the cooling and heating device 800 is the operation-triggered temperature adjustment mode. FIG. 3B shows the automatic temperature adjustment indication. The automatic temperature adjustment indication indicates that the setting mode of the cooling and heating device 800 is the navigation-triggered temperature adjustment mode. FIG. 3C shows a temperature adjustment OFF indication. The temperature adjustment OFF indication indicates that the setting mode of the cooling and heating device 800 is a temperature adjustment OFF mode that is a setting in which the cooling and heating device 800 does not execute the temperature adjustment.

The temperature adjustment ON indication, the automatic temperature adjustment indication, and the temperature adjustment OFF indication each indicating the setting mode of the cooling and heating device 800 include a first common element. In the present embodiment, the first common element is an image showing the battery 100, such as a picture of a dry battery, but is not limited to this and may be any other image. The temperature adjustment ON indication and the automatic temperature adjustment indication each indicating the setting mode in which the temperature adjustment can be executed include a second common element. In the present embodiment, the second common element is an image showing that the temperature of the battery 100 is being adjusted, such as three vertical wavy lines, but is not limited to this and may be any other image. The specific element is added to the common element in either the temperature adjustment ON indication or the automatic temperature adjustment indication (in the present embodiment, the automatic temperature adjustment indication). In the present embodiment, the specific element is an image showing the navigation-triggered temperature adjustment mode, such as a text "Auto," but is not limited to this and may be any other image. In the temperature adjustment ON indication and the automatic temperature adjustment indication, the operation surface is illuminated from the back by a light-emitting diode (LED) lamp. In the temperature adjustment OFF indication, the LED lamp is OFF.

Returning to FIG. 2, when determination is made that the navigation-triggered temperature adjustment mode is not set (NO in step S111), the CPU 301 determines whether the setting mode of the cooling and heating device 800 is set to the temperature adjustment OFF mode (step S121). When determination is made that the temperature adjustment OFF mode is set (YES in step S121), the CPU 301 determines whether the preconditioning switch 304 is turned ON (step S122).

When determination is made that the preconditioning switch 304 is turned ON (YES in step S122), the CPU 301 switches the setting mode of the cooling and heating device 800 from the temperature adjustment OFF mode to the operation-triggered temperature adjustment mode (step S123), and controls the preconditioning switch 304 to switch the indicator of the preconditioning switch 304 from the temperature adjustment OFF indication shown in FIG. 3C to the temperature adjustment ON indication shown in FIG. 3A (step S124).

When determination is made in step S112 that the preconditioning switch 304 is not turned ON (NO in step S112), after step S114, when determination is made that the temperature adjustment OFF mode is not set (NO in step S121), when determination is made in step S122 that the preconditioning switch 304 is not turned ON (NO in step S122), or after step S124, the CPU 301 returns the process to be executed to the higher-level process that has called the battery temperature adjustment setting process.

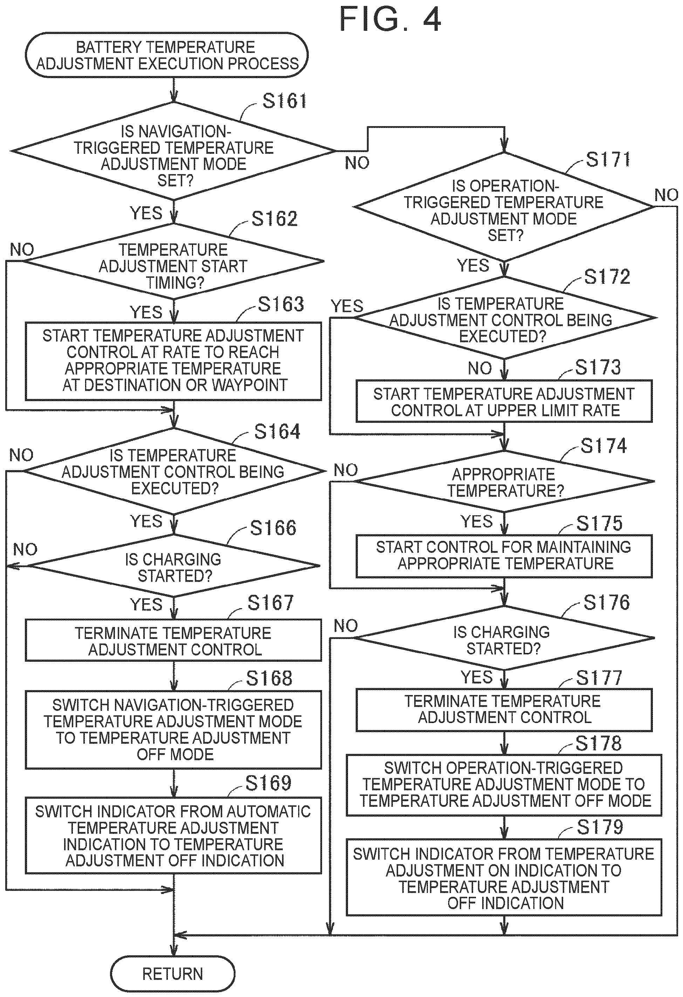

FIG. 4 is a flowchart showing a flow of a battery temperature adjustment execution process in the present embodiment. Referring to FIG. 4, the battery temperature adjustment execution process is executed by being called from a higher-level process by the CPU 301 of the ECU 300 at predetermined cycles.

First, the CPU 301 of the ECU 300 determines whether the setting mode of the cooling and heating device 800 is set to the navigation-triggered temperature adjustment mode (step S161). When determination is made that the navigation-triggered temperature adjustment mode is set (YES in step S161), the CPU 301 determines whether the current time is the temperature adjustment start timing (step S162). In the navigation-triggered temperature adjustment mode, the temperature adjustment start timing is the timing to start the temperature adjustment so that the temperature of the battery 100 is within the temperature range suitable for charging when the electrified vehicle 1 arrives at a facility where the battery 100 is chargeable in the travel route of the electrified vehicle 1. For example, the time to start the temperature adjustment is expressed by "estimated time of arrival at facility - period required for temperature adjustment," and the period required for the temperature adjustment is expressed by "(target temperature within temperature range suitable for charging battery 100 - current temperature of battery 100) / rate of change in temperature of battery 100 per unit time." When the current time is earlier than the time to start the temperature adjustment, cooling or heating may be started from the current time, and the rate of change may be reduced so that the temperature of the battery 100 reaches the target temperature at the estimated time of arrival at the facility.

When determination is made that the current time is the temperature adjustment start timing (YES in step S162), the CPU 301 controls the cooling and heating device 800 to start the temperature adjustment control at a rate at which the temperature of the battery 100 reaches the target temperature suitable for charging at the facility where the battery 100 is chargeable as the destination or waypoint on the travel route (step S163).

When determination is made that the current time is not the temperature adjustment start timing (NO in step S162) or after step S163, the CPU 301 determines whether the temperature adjustment control is being executed (step S164). When determination is made that the temperature adjustment control is being executed (YES in step S164), the CPU 301 determines whether charging of the battery 100 is started (step S166).

When determination is made that the charging of the battery 100 is started (YES in step S166), the CPU 301 terminates the temperature adjustment control by the cooling and heating device 800 (step S167), switches the setting mode of the cooling and heating device 800 from the navigation-triggered temperature adjustment mode to the temperature adjustment OFF mode (step S168), and controls the preconditioning switch 304 to switch the indicator of the preconditioning switch 304 from the automatic temperature adjustment indication shown in FIG. 3B to the temperature adjustment OFF indication shown in FIG. 3C (step S169).

When determination is made that the temperature adjustment control is not being executed (NO in step S164), when determination is made that the charging of the battery 100 is not started (NO in step S166), or after step S169, the CPU 301 returns the process to be executed to the higher-level process that has called the battery temperature adjustment execution process.

When determination is made that the navigation-triggered temperature adjustment mode is not set (NO in step S161), the CPU 301 determines whether the setting mode of the cooling and heating device 800 is set to the operation-triggered temperature adjustment mode (step S171). When determination is made that the operation-triggered temperature adjustment mode is set (YES in step S171), the CPU 301 determines whether the temperature adjustment control is being executed (step S172). When determination is made that the temperature adjustment control is not being executed (NO in step S172), the CPU 301 controls the cooling and heating device 800 to start the temperature adjustment control at an upper limit rate of the cooling and heating device 800 (step S173).

When determination is made that the temperature adjustment control is being executed (YES in step S172) or after step S173, the CPU 301 determines whether the temperature of the battery 100 has reached the target temperature within the temperature range suitable for charging or traveling, that is, the appropriate temperature (step S174). When determination is made that the appropriate temperature has been reached (YES in step S174), the CPU 301 controls the cooling and heating device 800 to start control for maintaining the appropriate temperature of the battery 100 (step S175).

When determination is made that the appropriate temperature has not been reached (NO in step S174) or after step S175, the CPU 301 determines whether the charging of the battery 100 is started (step S176).

When determination is made that the charging of the battery 100 is started (YES in step S176), the CPU 301 terminates the temperature adjustment control by the cooling and heating device 800 (step S177), switches the setting mode of the cooling and heating device 800 from the operation-triggered temperature adjustment mode to the temperature adjustment OFF mode (step S178), and controls the preconditioning switch 304 to switch the indicator of the preconditioning switch 304 from the temperature adjustment ON indication shown in FIG. 3A to the temperature adjustment OFF indication shown in FIG. 3C (step S179).

When determination is made that the operation-triggered temperature adjustment mode is not set (NO in step S171), when determination is made that the charging of the battery 100 is not started (NO in step S176), or after step S179, the CPU 301 returns the process to be executed to the higher-level process that has called the battery temperature adjustment execution process.

### Second Embodiment

In the first embodiment, as shown in step S113 of FIG. 2, when the predetermined operation for adjusting the temperature of the battery 100 is received in the navigation-triggered temperature adjustment mode in which the temperature of the battery 100 is adjusted when the travel route includes a facility where the battery 100 is chargeable, the CPU 301 of the ECU 300 gives priority to the operation-triggered temperature adjustment mode in which the temperature of the battery 100 is adjusted in response to the predetermined operation.

In a second embodiment, when the setting mode is the navigation-triggered temperature adjustment mode and the predetermined user operation for adjusting the temperature of the battery 100 is received, the CPU 301 of the ECU 300 rejects the predetermined operation and maintains the navigation-triggered temperature adjustment mode.

Therefore, when the predetermined operation is received in the navigation-triggered temperature adjustment mode, the predetermined operation is rejected and the navigation-triggered temperature adjustment mode is maintained without being switched to the operation-triggered temperature adjustment mode. As a result, the temperature of the battery 100 can be brought into the temperature range suitable for charging at the time of arrival at a facility where the battery 100 is chargeable, and additional power consumption due to adjustment of the temperature of the battery 100 in response to the user operation for adjusting the temperature of the battery 100 can be suppressed.

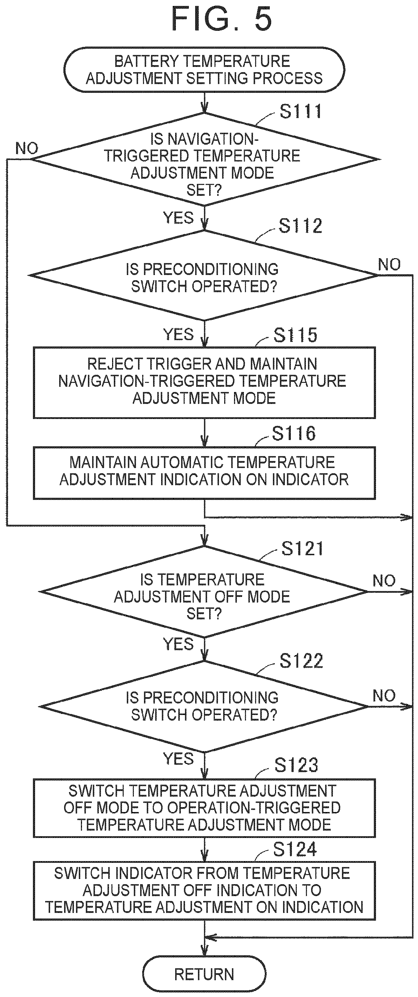

FIGS. 1, 3A to 3C, and 4 in the first embodiment are common to the second embodiment. FIG. 5 is a flowchart showing a flow of a battery temperature adjustment setting process in the second embodiment. Referring to FIG. 5, the battery temperature adjustment setting process is executed by being called from a higher-level process by the CPU 301 of the ECU 300 at predetermined cycles. Steps in FIG. 5 with the same signs as those in FIG. 2 are similar to the processes in FIG. 2, and therefore redundant description will not be repeated.

When determination is made that the preconditioning switch 304 is turned ON (YES in step S112), the CPU 301 rejects the trigger that is the ON operation on the preconditioning switch 304, maintains the navigation-triggered temperature adjustment mode as the setting mode of the cooling and heating device 800 (step S115), and maintains the automatic temperature adjustment indication shown in FIG. 3B on the indicator of the preconditioning switch 304 (step S116). After step S116, the CPU 301 returns the process to be executed to the higher-level process that has called the battery temperature adjustment setting process.

### Third Embodiment

In the second embodiment, as shown in step S 115 of FIG. 5, when the predetermined user operation for adjusting the temperature of the battery 100 is received in the navigation-triggered temperature adjustment mode in which the temperature of the battery 100 is adjusted when the travel route includes a facility where the battery 100 is chargeable, the CPU 301 of the ECU 300 rejects the predetermined operation and maintains the navigation-triggered temperature adjustment mode.

In a third embodiment, when the setting mode is the operation-triggered temperature adjustment mode in which the temperature of the battery 100 is adjusted in response to the predetermined user operation and the travel route of the electrified vehicle 1 includes a facility where the battery 100 is chargeable, the CPU 301 of the ECU 300 maintains the operation-triggered temperature adjustment mode.

Therefore, when the operation-triggered temperature adjustment mode is set and the travel route includes a facility where the battery 100 is chargeable, the operation-triggered temperature adjustment mode is maintained without being switched to the navigation-triggered temperature adjustment mode. As a result, the temperature of the battery 100 can be quickly adjusted in response to the user operation for adjusting the temperature of the battery 100.

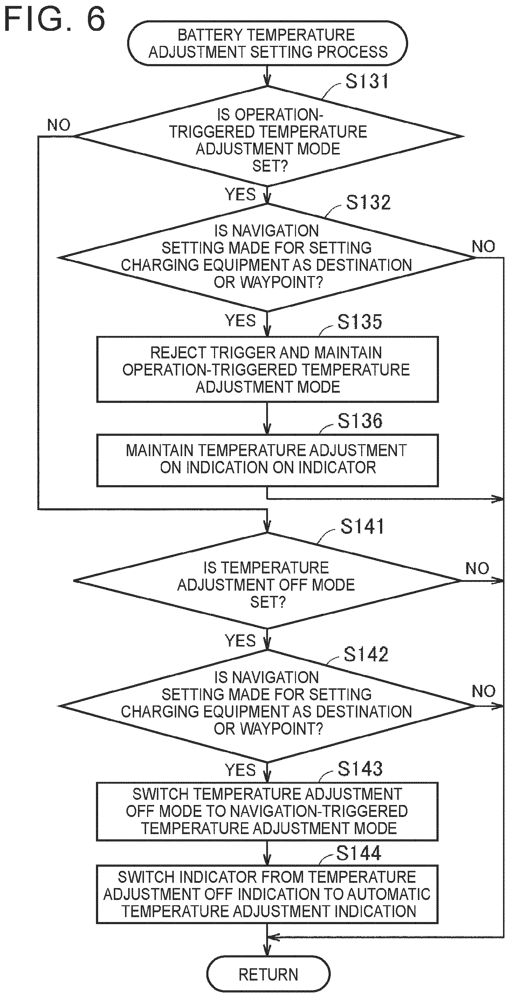

FIGS. 1, 3A, 3B, 3C, and 4 in the first embodiment are common to the third embodiment. FIG. 6 is a flowchart showing a flow of a battery temperature adjustment setting process in the third embodiment. Referring to FIG. 6, the battery temperature adjustment setting process is executed by being called from a higher-level process by the CPU 301 of the ECU 300 at predetermined cycles.

First, the CPU 301 of the ECU 300 determines whether the setting mode of the cooling and heating device 800 is set to the operation-triggered temperature adjustment mode (step S 131). When determination is made that the operation-triggered temperature adjustment mode is set (YES in step S131), the CPU 301 determines whether a navigation setting for setting charging equipment such as the EVSE 2 as a destination or a waypoint is received by the navigation device 600 (step S 132).

When determination is made that the navigation setting for setting charging equipment as a destination or a waypoint is received (YES in step S 132), the CPU 301 rejects the trigger that is the reception of the navigation setting for setting charging equipment as a destination or a waypoint, maintains the operation-triggered temperature adjustment mode as the setting mode of the cooling and heating device 800 (step S135), and maintains the temperature adjustment ON indication shown in FIG. 3A on the indicator of the preconditioning switch 304 (step S136).

When determination is made that the operation-triggered temperature adjustment mode is not set (NO in step S131), the CPU 301 determines whether the setting mode of the cooling and heating device 800 is set to the temperature adjustment OFF mode (step S141). When determination is made that the temperature adjustment OFF mode is set (YES in step S141), the CPU 301 determines whether a navigation setting for setting charging equipment such as the EVSE 2 as a destination or a waypoint is received by the navigation device 600 (step S142).

When determination is made that the navigation setting for setting charging equipment as a destination or a waypoint is received (YES in step S142), the CPU 301 switches the setting mode of the cooling and heating device 800 from the temperature adjustment OFF mode to the navigation-triggered temperature adjustment mode (step S143), and controls the preconditioning switch 304 to switch the indicator of the preconditioning switch 304 from the temperature adjustment OFF indication shown in FIG. 3C to the automatic temperature adjustment indication shown in FIG. 3B (step S144).

When determination is made in step S132 that the navigation setting for setting charging equipment as a destination or a waypoint is not received (NO in step S132), after step S136, when determination is made that the temperature adjustment OFF mode is not set (NO in step S141), when determination is made in step S142 that the navigation setting for setting charging equipment as a destination or a waypoint is not received (NO in step S142), or after step S144, the CPU 301 returns the process to be executed to the higher-level process that has called the battery temperature adjustment setting process.

### Fourth Embodiment

In the third embodiment, as shown in step S135 of FIG. 6, when the setting mode is the operation-triggered temperature adjustment mode in which the temperature of the battery 100 is adjusted in response to the predetermined user operation and the travel route of the electrified vehicle 1 includes a facility where the battery 100 is chargeable, the CPU 301 of the ECU 300 maintains the operation-triggered temperature adjustment mode.

In a fourth embodiment, when the setting mode is the operation-triggered temperature adjustment mode and the travel route of the electrified vehicle 1 includes a facility where the battery 100 is chargeable, the CPU 301 of the ECU 300 gives priority to the navigation-triggered temperature adjustment mode in which the temperature of the battery 100 is adjusted when the travel route includes a facility where the battery 100 is chargeable.

Therefore, when the operation-triggered temperature adjustment mode is set, the navigation-triggered temperature adjustment mode is given priority over the operation-triggered temperature adjustment mode. As a result, the temperature of the battery 100 can be brought into the temperature range suitable for charging at the time of arrival at a facility where the battery 100 is chargeable, and additional power consumption due to adjustment of the temperature of the battery 100 in response to the user operation for adjusting the temperature of the battery 100 can be suppressed.

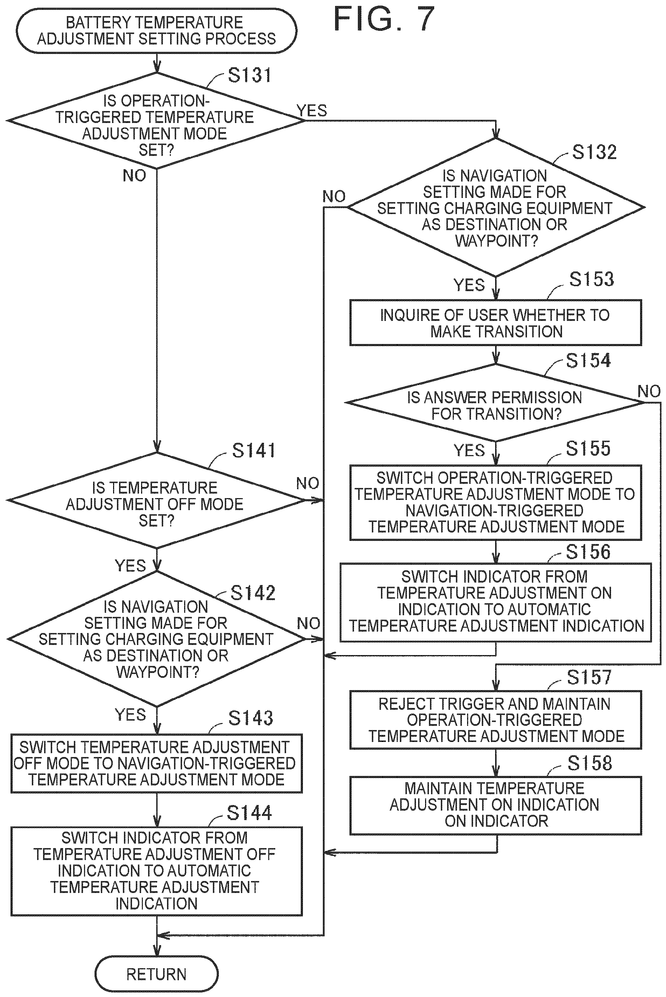

FIGS. 1, 3A, 3B, 3C, and 4 in the first embodiment are common to the fourth embodiment. FIG. 7 is a flowchart showing a flow of a battery temperature adjustment setting process in the fourth embodiment. Referring to FIG. 7, the battery temperature adjustment setting process is executed by being called from a higher-level process by the CPU 301 of the ECU 300 at predetermined cycles. Steps in FIG. 7 with the same signs as those in FIG. 6 are similar to the processes in FIG. 6, and therefore redundant description will not be repeated.

When determination is made that a navigation setting for setting charging equipment as a destination or a waypoint is received (YES in step S132), the CPU 301 controls the HMI device 700 via the communication unit 303 to output a display (or audio) message for inquiring of the user whether to make transition of the setting mode from the operation-triggered temperature adjustment mode to the navigation-triggered temperature adjustment mode (step S153). The CPU 701 of the HMI device 700 controls the touch panel display 704 to output the message for inquiring of the user whether to make transition of the setting mode from the operation-triggered temperature adjustment mode to the navigation-triggered temperature adjustment mode in response to a control signal received from the CPU 301 of the ECU 300 by the communication unit 703.

Next, the CPU 301 determines whether the answer to the inquiry in step S153 is permission for the transition (step S154). When determination is made that the answer is permission for the transition (YES in step S154), the CPU 301 switches the setting mode of the cooling and heating device 800 from the operation-triggered temperature adjustment mode to the navigation-triggered temperature adjustment mode (step S155), and switches the indicator of the preconditioning switch 304 from the temperature adjustment ON indication shown in FIG. 3A to the automatic temperature adjustment indication shown in FIG. 3B (step S156).

When determination is made that the answer is not permission for the transition (NO in step S154), the CPU 301 rejects the trigger that is the reception of the navigation setting for setting charging equipment as a destination or a waypoint, maintains the operation-triggered temperature adjustment mode as the setting mode of the cooling and heating device 800 (step S157), and maintains the temperature adjustment ON indication shown in FIG. 3A on the indicator of the preconditioning switch 304 (step S 158).

When determination is made in step S132 that the navigation setting for setting charging equipment as a destination or a waypoint is not received (NO in step S132), after step S156, or after step S158, the CPU 301 returns the process to be executed to the higher-level process that has called the battery temperature adjustment setting process.

### Fifth Embodiment

In the fourth embodiment, as shown in steps S153 to S155 of FIG. 7, when the setting mode is the operation-triggered temperature adjustment mode in which the temperature of the battery 100 is adjusted in response to the predetermined user operation and the travel route of the electrified vehicle 1 includes a facility where the battery 100 is chargeable, the CPU 301 of the ECU 300 inquires of the user whether to switch the setting mode to the navigation-triggered temperature adjustment mode in which the temperature of the battery 100 is adjusted when the travel route includes a facility where the battery 100 is chargeable, thereby giving priority to the navigation-triggered temperature adjustment mode.

In a fifth embodiment, when the setting mode is the operation-triggered temperature adjustment mode and the travel route of the electrified vehicle 1 includes a facility where the battery 100 is chargeable, the CPU 301 of the ECU 300 gives priority to the navigation-triggered temperature adjustment mode by switching the operation-triggered temperature adjustment mode to the navigation-triggered temperature adjustment mode.

Therefore, when the operation-triggered temperature adjustment mode is set and the travel route includes a facility where the battery 100 is chargeable, the navigation-triggered temperature adjustment mode is given priority over the operation-triggered temperature adjustment mode. As a result, the temperature of the battery 100 can be brought into the temperature range suitable for charging at the time of arrival at a facility where the battery 100 is chargeable, and additional power consumption due to adjustment of the temperature of the battery 100 in response to the user operation for adjusting the temperature of the battery 100 can be suppressed.

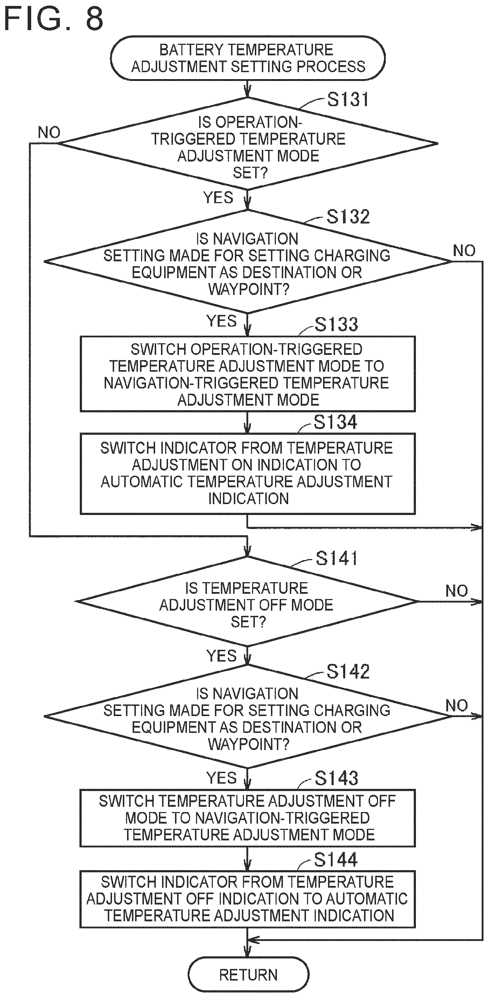

FIGS. 1, 3A, 3B, 3C, and 4 in the first embodiment are common to the fifth embodiment. FIG. 8 is a flowchart showing a flow of a battery temperature adjustment setting process in the fifth embodiment. Referring to FIG. 8, the battery temperature adjustment setting process is executed by being called from a higher-level process by the CPU 301 of the ECU 300 at predetermined cycles. Steps in FIG. 8 with the same signs as those in FIGS. 6 and 7 are similar to the processes in FIGS. 6 and 7, and therefore redundant description will not be repeated.

When determination is made that a navigation setting for setting charging equipment as a destination or a waypoint is received (YES in step S132), the CPU 301 switches the setting mode of the cooling and heating device 800 from the operation-triggered temperature adjustment mode to the navigation-triggered temperature adjustment mode (step S133), and switches the indicator of the preconditioning switch 304 from the temperature adjustment ON indication shown in FIG. 3A to the automatic temperature adjustment indication shown in FIG. 3B (step S134). Then, the CPU 301 returns the process to be executed to the higher-level process that has called the battery temperature adjustment setting process.

### Modifications

(1) In the above embodiments, as shown in FIGS. 1, 3A, 3B, and 3C, the preconditioning switch 304 is the push button switch including the indicator on its operation surface. However, the present disclosure is not limited to this, and the preconditioning switch 304 may be a button displayed on the screen of the touch panel display 704 of the HMI device 700. In this case, the setting mode of the cooling and heating device 800 may be displayed on the button displayed on the screen, or may be displayed in any other part of the screen.
(2) In the above embodiments, as shown in steps S174 and S175 of FIG. 4, when the temperature of the battery 100 is the appropriate temperature in the operation-triggered temperature adjustment mode, the control is executed to maintain the appropriate temperature. However, the present disclosure is not limited to this, and the temperature adjustment control may be terminated when the temperature of the battery 100 is the appropriate temperature.
(3) In the second embodiment, as shown in step S115 of FIG. 5, when the setting mode is the navigation-triggered temperature adjustment mode, the navigation-triggered temperature adjustment mode is given priority over the operation-triggered temperature adjustment mode by rejecting the trigger that is the predetermined operation such as the ON operation on the preconditioning switch 304.
   However, the present disclosure is not limited to this, and the method for giving priority to the navigation-triggered temperature adjustment mode may be any other method. For example, when the setting mode is the navigation-triggered temperature adjustment mode, the predetermined operation may be made unexecutable. When the predetermined operation is executed while the setting mode is the navigation-triggered temperature adjustment mode, an inquiry may be given to the user as to whether to switch the navigation-triggered temperature adjustment mode to the operation-triggered temperature adjustment mode.
(4) In the third embodiment, as shown in step S135 of FIG. 6, when the setting mode is the operation-triggered temperature adjustment mode and the travel route includes a facility where the battery 100 is chargeable, the operation-triggered temperature adjustment mode is given priority by rejecting the trigger for the switching to the navigation-triggered temperature adjustment mode in which the temperature of the battery 100 is adjusted when the travel route includes a facility where the battery 100 is chargeable.
   In the fourth embodiment, as shown in steps S153, S154, S157 of FIG. 7, when the setting mode is the operation-triggered temperature adjustment mode and the travel route includes a facility where the battery 100 is chargeable, the operation-triggered temperature adjustment mode is given priority by inquiring of the user whether to switch the setting mode to the navigation-triggered temperature adjustment mode.
   However, the present disclosure is not limited to this, and the method for giving priority to the operation-triggered temperature adjustment mode may be any other method. For example, when the setting mode is the operation-triggered temperature adjustment mode, the determination to make transition to the navigation-triggered temperature adjustment mode may be prohibited.
(5) In the fourth embodiment, as shown in step S153 of FIG. 7, the touch panel display 704 of the HMI device 700 outputs the message for inquiring of the user whether to make transition of the setting mode from the operation-triggered temperature adjustment mode to the navigation-triggered temperature adjustment mode. However, the present disclosure is not limited to this, and the inquiry message may be output on the touch panel display of the user equipment 3.
(6) The above embodiments may be combined in any way as long as combinations are possible. For example, the first embodiment may be combined with any of the third to fifth embodiments, or the second embodiment may be combined with any of the third to fifth embodiments.
(7) The above embodiments can be understood as disclosure of a battery temperature adjustment system including the cooling and heating device 800 and the ECU 300, disclosure of a vehicle such as the electrified vehicle 1 including the battery temperature adjustment system, or disclosure of a battery temperature adjustment method or a battery temperature adjustment program for adjusting the temperature of the battery 100 in the battery temperature adjustment system or the vehicle.

### Summary

(1) As shown in FIG. 1, the battery temperature adjustment system adjusts the temperature of the battery 100 mounted on the electrified vehicle 1, and includes the cooling and heating device 800 configured to adjust the temperature of the battery 100, and a processor (e.g., the CPU 301 of the ECU 300) configured to control the cooling and heating device 800. As shown in FIG. 2 etc., the setting mode of the cooling and heating device 800 includes the navigation-triggered temperature adjustment mode that is the setting in which, when the travel route of the electrified vehicle 1 includes a facility where the battery 100 is chargeable (e.g., the EVSE 2), the temperature of the battery 100 is adjusted within the first temperature range suitable for charging at the time of arrival at the facility, and the operation-triggered temperature adjustment mode that is the setting in which the temperature of the battery 100 is adjusted within the second temperature range suitable for charging or traveling in response to reception of the predetermined operation by the user of the electrified vehicle 1 for adjusting the temperature of the battery 100 within the second temperature range (e.g., the ON operation on the preconditioning switch 304).
(2) In the above (1), as shown in FIG. 4, the processor controls the cooling and heating device 800 to adjust the temperature of the battery 100 according to the setting mode. As shown in FIG. 2 in the first embodiment, when the predetermined operation is received while the setting mode is the navigation-triggered temperature adjustment mode, the processor gives priority to the operation-triggered temperature adjustment mode (e.g., step S113).
   Therefore, when the predetermined user operation for adjusting the temperature of the battery 100 is received in the navigation-triggered temperature adjustment mode in which the temperature of the battery 100 is adjusted when the travel route includes a facility where the battery 100 is chargeable, priority is given to the operation-triggered temperature adjustment mode in which the temperature of the battery 100 is adjusted in response to the predetermined user operation. As a result, the temperature of the battery 100 can be quickly adjusted in response to the user operation for adjusting the temperature of the battery 100.
(3) In the above (1), as shown in FIG. 4, the processor controls the cooling and heating device 800 to adjust the temperature of the battery 100 according to the setting mode. As shown in FIG. 5 in the second embodiment, when the predetermined operation is received while the setting mode is the navigation-triggered temperature adjustment mode, the processor rejects the predetermined operation and maintains the navigation-triggered temperature adjustment mode (e.g., step S 115).
   Therefore, when the predetermined user operation for adjusting the temperature of the battery 100 is received in the navigation-triggered temperature adjustment mode in which the temperature of the battery 100 is adjusted when the travel route includes a facility where the battery 100 is chargeable, the predetermined operation is rejected and the navigation-triggered temperature adjustment mode is maintained without being switched to the operation-triggered temperature adjustment mode in which the temperature of the battery 100 is adjusted in response to the predetermined user operation. As a result, the temperature of the battery 100 can be brought into the temperature range suitable for charging at the time of arrival at a facility where the battery 100 is chargeable, and additional power consumption due to adjustment of the temperature of the battery 100 in response to the user operation for adjusting the temperature of the battery 100 can be suppressed.
(4) In the above (1), as shown in FIG. 4, the processor controls the cooling and heating device 800 to adjust the temperature of the battery 100 according to the setting mode. As shown in FIG. 6 in the third embodiment, when the setting mode is the operation-triggered temperature adjustment mode and the travel route includes a facility, the processor maintains the operation-triggered temperature adjustment mode (e.g., step S135).
   Therefore, when the setting mode is the operation-triggered temperature adjustment mode in which the temperature of the battery 100 is adjusted in response to the predetermined user operation and the travel route includes a facility where the battery 100 is chargeable, the operation-triggered temperature adjustment mode is maintained without being switched to the navigation-triggered temperature adjustment mode in which the temperature of the battery 100 is adjusted when the travel route includes a facility where the battery 100 is chargeable. As a result, the temperature of the battery 100 can be quickly adjusted in response to the user operation for adjusting the temperature of the battery 100. For example, when there is a desire to secure a driving force in the current traveling situation, the operation-triggered temperature adjustment mode in which the temperature of the battery 100 is adjusted within the temperature range suitable for traveling is maintained, thereby shortening the period required for the battery 100 to reach the temperature range suitable for traveling.
(5) In the above (1), as shown in FIG. 4, the processor controls the cooling and heating device 800 to adjust the temperature of the battery 100 according to the setting mode. As shown in FIG. 7 in the fourth embodiment and FIG. 8 in the fifth embodiment, when the setting mode is the operation-triggered temperature adjustment mode and the travel route includes a facility, the processor gives priority to the navigation-triggered temperature adjustment mode (e.g., steps S153 to S155 of FIG. 7 and step S143 of FIG. 8).
   Therefore, when the setting mode is the operation-triggered temperature adjustment mode in which the temperature of the battery 100 is adjusted in response to the predetermined user operation and the travel route includes a facility where the battery 100 is chargeable, the navigation-triggered temperature adjustment mode in which the temperature of the battery 100 is adjusted when the travel route includes a facility where the battery 100 is chargeable is given priority over the operation-triggered temperature adjustment mode. As a result, the temperature of the battery 100 can be brought into the temperature range suitable for charging at the time of arrival at a facility where the battery 100 is chargeable, and additional power consumption due to adjustment of the temperature of the battery 100 in response to the user operation for adjusting the temperature of the battery 100 can be suppressed.
(6) In the above (1), as shown in FIG. 1, the battery temperature adjustment system further includes the display device (e.g., the touch panel display 704 of the HMI device 700) configured to display the setting mode of the cooling and heating device 800. As shown in FIGS. 3A, 3B, and 3C, the display device includes the common element (e.g., the picture of the dry battery in FIGS. 3A and 3B and the three vertical wavy lines in FIGS. 3A and 3B) in the indication of each of the navigation-triggered temperature adjustment mode and the operation-triggered temperature adjustment mode, and adds the specific element (e.g., the text "Auto" in FIG. 3B) to the common element in either the navigation-triggered temperature adjustment mode or the operation-triggered temperature adjustment mode (e.g., the navigation-triggered temperature adjustment mode). As shown in FIG. 2 in the first embodiment, FIG. 5 in the second embodiment, FIG. 6 in the third embodiment, FIG. 7 in the fourth embodiment, and FIG. 8 in the fifth embodiment, the processor controls the display device to display the common element when the setting mode is each of the navigation-triggered temperature adjustment mode and the operation-triggered temperature adjustment mode, and to display the specific element when the setting mode is either one of them (e.g., step S114 of FIG. 2, step S116 of FIG. 5, step S124 of FIGS. 2 and 5, step S136 of FIG. 6, steps S156 and S158 of FIG. 7, step S134 of FIG. 8, and step S144 of FIGS. 6 to 8).

Therefore, the display device displays the common element in each of the navigation-triggered temperature adjustment mode in which the temperature of the battery 100 is adjusted when the travel route includes a facility where the battery 100 is chargeable and the operation-triggered temperature adjustment mode in which the temperature of the battery 100 is adjusted in response to the predetermined user operation, and displays the specific element in either one of the two modes. As a result, the user can be informed of a plurality of settings for adjusting the temperature of the battery 100 in an easy-to-understand way, thereby suppressing a decrease in usability.

The embodiments disclosed herein should be construed as illustrative in all respects and not restrictive. The scope of the present disclosure is set forth in the claims rather than in the above description of the embodiments, and is intended to include all modifications within the meaning and scope equivalent to those of the claims.

## Claims

1. A battery temperature adjustment system configured to adjust a temperature of a power storage device (100) mounted on a vehicle (1), the battery temperature adjustment system comprising:
a temperature adjustment device (800) configured to adjust the temperature of the power storage device (100);
a processor (301) configured to control the temperature adjustment device (800); and
a display device (704) configured to display a setting mode of the temperature adjustment device, (800) wherein
the setting mode of the temperature adjustment device (800) includes a first mode and a second mode,
the first mode is a mode that is a setting in which, when a travel route of the vehicle (1) includes a facility where the power storage device (100) is chargeable, the temperature of the power storage device (100) is adjusted within a first temperature range suitable for charging at a time of arrival at the facility,
the second mode is a mode that is a setting in which the temperature of the power storage device (100) is adjusted within a second temperature range suitable for charging or traveling in response to reception of a predetermined operation, for adjusting the temperature of the power storage device (100) within the second temperature range, by a user of the vehicle (1),
the display device (704) is configured to include a common element in an indication of each of the first mode and the second mode, and to add a specific element to the common element in either the first mode or the second mode,
the processor (301) is configured to control the display device (704) to display the common element when the setting mode is each of the first mode and the second mode, and
the processor (301) is configured to control the display device (704) to display the specific element when the setting mode is either the first mode or the second mode.

2. The battery temperature adjustment system according to claim 1, wherein:
the processor (301) is configured to control the temperature adjustment device (800) to adjust the temperature of the power storage device (100) according to the setting mode; and
the processor (301) is configured to give priority to the second mode when the predetermined operation is received while the setting mode is the first mode.

3. The battery temperature adjustment system according to claim 1, wherein:
the processor (301) is configured to control the temperature adjustment device (800) to adjust the temperature of the power storage device (100) according to the setting mode; and
the processor (301) is configured to, when the predetermined operation is received while the setting mode is the first mode, reject the predetermined operation and maintain the first mode.

4. The battery temperature adjustment system according to claim 1, wherein:
the processor (301) is configured to control the temperature adjustment device (800) to adjust the temperature of the power storage device (100) according to the setting mode; and
the processor (301) is configured to maintain the second mode when the setting mode is the second mode and the travel route includes the facility.

5. The battery temperature adjustment system according to claim 1, wherein:
the processor (301) is configured to control the temperature adjustment device (800) to adjust the temperature of the power storage device (100) according to the setting mode; and
the processor (301) is configured to give priority to the first mode when the setting mode is the second mode and the travel route includes the facility.

6. A battery temperature adjustment method in a battery temperature adjustment system configured to adjust a temperature of a power storage device (100) mounted on a vehicle (1), the battery temperature adjustment method comprising:
controlling, by a processor (301), a display device (704) to display a common element when a setting mode is each of a first mode and a second mode; and
controlling, by the processor (301), the display device (704) to display a specific element when the setting mode is either the first mode or the second mode, wherein
the battery temperature adjustment system includes a temperature adjustment device (800) configured to adjust the temperature of the power storage device (100), the processor (301) configured to control the temperature adjustment device (800), and the display device (704) configured to display the setting mode of the temperature adjustment device (800),
the setting mode of the temperature adjustment device (800) includes the first mode and the second mode,
the first mode is a mode that is a setting in which, when a travel route of the vehicle (1) includes a facility where the power storage device (100) is chargeable, the temperature of the power storage device (100) is adjusted within a first temperature range suitable for charging at a time of arrival at the facility,
the second mode is a mode that is a setting in which the temperature of the power storage device (100) is adjusted within a second temperature range suitable for charging or traveling in response to reception of a predetermined operation, for adjusting the temperature of the power storage device (100) within the second temperature range, by a user of the vehicle (1), and
the display device (704) is configured to include the common element in an indication of each of the first mode and the second mode, and to add the specific element to the common element in either the first mode or the second mode.
